# EUROPÄISCHE PATENTANMELDUNG

(11) **EP 3 023 245 A1**
(43) Veröffentlichungstag der Anmeldung: **25.05.2016**
(21) Anmeldenummer: 14194499.1
(22) Anmeldetag: 24.11.2014
(51) Int. Cl.: B32B 17/06, B32B 17/10

(54) **Lichtduchlässiges Hitzeschutzelement**

(71) Anmelder: Saint-Gobain Glass France, 92400 Courbevoie (FR)
(72) Erfinder: Gelderie, Udo, 52146 Würselen (DE); Schwankhaus, Norbert, 52499 Baesweiler (DE); Te Strake, David, 52070 Aachen (DE)
(74) Vertreter: Frei Patent Attorneys

(57) **Zusammenfassung**

Ein lichtdurchlässige Hitzeschutzelement mit einem ersten und einem zweiten Trägerelement weist eine Zwischenschicht zwischen dem ersten und zweiten Trägerelement auf. Die Zwischenschicht weist ein ausgehärtetes Alkalisilikatgel auf, welches aus einer wässrigen Alkalisilikatlösung und einer Siliziumdioxidverbindung gebildet wird. Dabei weist das Alkalisilikatgel der Zwischenschicht ein Molverhältnis von Siliziumdioxid (SiO₂) zu Alkalimetalloxid (M₂O) grösser 4 auf. Des Weiteren weist das Alkalisilikatgel 0.05 bis 0.14 Gewichtsprozent Lithiumsilikat auf.

## Beschreibung

Die Erfindung bezieht sich auf das Gebiet des Brandschutzes insbesondere auf eine Brandschutzverglasung mit einer Brandschutzzwischenschicht aus wasserhaltigem Alkalisilikat. Sie bezieht sich auf eine Brandschutzverglasung gemäss dem Oberbegriff des unabhängigen Patentanspruches 1.

Ein lichtdurchlässiges Hitzeschutzelement mit einer Schutzschicht aus einem ausgehärteten Polysilikat zwischen jeweils zwei Glasplatten ist beispielsweise aus WO 94/04355 bekannt. Das ausgehärtete Polysilikat wird aus einem Alkalisilikat und mindestens einem Härter gebildet, wobei im Polysilikat ein Molverhältnis von Siliziumdioxid zu Alkali-Metalloxid (M₂O) eingestellt wird, welches grösser als 4:1 ist. Das Polysilikat ist als Alkalisilikat-Wasserglas ausgebildet. Die Ausgangsmasse für das Polysilikat/ Alkalisilikat-Wasserglas ist eine fliessfähige Masse mit einem Wassergehalt bis zu 60 % und lässt sich in den Zwischenraum zwischen zwei Glassplatten eingiessen. Beim Aushärten der Masse bleibt der hohe Wassergehalt erhalten, und das Polysilikat/Alkalisilikat-Wasserglas weist trotzdem eine gute Eigenfestigkeit und Haftung an den Glassplatten auf. Als Alkalisilikat wird vorzugsweise ein Lithium-, Natrium- oder Kaliumsilikat oder eine Mischung davon und als Alkali-Metalloxid ein Natrium-, Kalium- oder Lithiumoxid oder eine Mischung davon eingesetzt. Der Gehalt an Alkali-Metalloxid (M₂O) in der Form von Natrium-, Kalium- oder Lithiumoxid oder einer Mischung davon beträgt maximal 16%.

Bei Schutzschichten aus wasserhaltigern Alkalisilikat und Kieselsol als Härter gemäss WO 94/04355 kann insbesondere mit der Zeit oder unter ungünstigen Umweltfaktoren, wie beispielsweise durch lange heisse Sommer mit länger andauernden Einwirkung von erhöhten Temperaturen, oder unsachgemässem Gebrauch eine Tendenz zur Eintrübung beobachtet werden, und ein Eintrübungsprozess initiiert werden kann.

In WO 2009/111897 wird ein lichtdurchlässiges Hitzeschutzelement mit mindestens einem Trägerelement und mindestens einer Schutzschicht offenbart. Die Schutzschicht umfasst ein Reaktionsprodukt, welches eine wässrige Alkalisilikatlösung und aluminium- oder borat-modifiziertes Siliziumdioxid umfasst, um die Alterungsbeständigkeit des Hitzeschutzelements zu erhöhen. Das Reaktionsprodukt weist ein Molverhältnis aus Siliziumdioxid und Alkalimetalloxid (M₂O; M=Bor, Lithium, Natrium oder Kalium) von 4 bis 7 auf. Der Gehalt an Alkali-Metalloxid in der Form von Natrium-, Kalium- oder Lithiumoxid oder einer Mischung davon beträgt maximal 16%.

Es ist deshalb Aufgabe der Erfindung, ein alternatives Hitzeschutzelement zu schaffen, welches eine reduzierte Tendenz zur Eintrübung und damit eine verbesserte Alterungsbeständigkeit aufweist.

Diese Aufgabe löst ein lichtdurchlässiges Hitzeschutzelement mit den Merkmalen des unabhängigen Patentanspruches 1.

Das lichtdurchlässige Hitzeschutzelement mit einem ersten und einem zweiten Trägerelement weist eine Zwischenschicht zwischen dem ersten und zweiten Trägerelement auf. Die Zwischenschicht weist ein ausgehärtetes Alkalisilikatgel auf, welches aus einer wässrigen Alkalisilikatlösung und einer Siliziumdioxidverbindung gebildet wird. Dabei weist das Alkalisilikatgel der Zwischenschicht ein Molverhältnis von Siliziumdioxid (SiO₂) zu Alkalimetalloxid (M₂O) grösser 4 auf. Des Weiteren weist das Alkalisilikatgel 0.05 bis 0.14 Gewichtsprozent Lithiumsilikat auf.

Bei Langzeitmessungen der Trübung von Hitzeschutzelement mit zwei Trägerelementen und einer Zwischenschicht aus ausgehärtetem Alkalisilikatgel mit einem konstanten Molverhältnis von Siliziumdioxid zu Alkalimetalloxid (auch als Modul bezeichnet) hat sich gezeigt, dass eine Zudosierung von Lithiumsilikat einen positiven Effekt auf die Langzeittransparenz der Zwischenschicht hat.

Um die Alterung von Hitzeschutzelementen mit verschiedenen Zudosierungen von Lithiumsilikat zum Alkalisilikatgel der Zwischenschicht zu untersuchen, wurden die Hitzeschutzelemente bei 60°C gealtert und deren Trübung über die Zeit gemessen.

Die Langzeitmessungen der Trübung der Hitzeschutzelemente zeigen überraschenderweise, dass im Bereich von 0.05 bis 0.14 Gewichtsprozent Lithiumsilikat eine verstärkte Reduktion der Trübung des Hitzeschutzelements als Alterserscheinung erreicht werden kann. Bei einem höheren Gehalt an Lithiumsilikat kann erneut eine Zunahme der Eintrübung im Laufe der Zeit festgestellt werden. Mit anderen Worten: Eine Über- oder Unterdosierung von Lithiumsilikat zum Alkalisilikatgel führt zu keinem oder einem weniger ausgeprägten positiven Effekt auf die Alterungsbeständigkeit des Hitzeschutzelements.

Im Gegensatz dazu würde der Fachmann erwarten, dass eine weitere Steigerung des Lithiumsilikatgehaltes eine weitere Verbesserung der Alterungsbeständigkeit erreicht werden kann und beispielsweise wie in WO 94/04355 offenbart einer Zwischenschichten mit einem Gehalt von bis zu 16% Lithiumoxid verwenden.

In weiteren Ausführungsbeispielen kann die Siliziumdioxidverbindung zur Bildung des Alkalisilikatgels ein Kieselsol, Fällungssiliziumdioxid, Kieselgel und/oder pyrogenem Siliziumdioxid aufweisen. Auf diese Weise wird es möglich dass die Bildung eines homogenen und klaren Alkalisilikatgels erleichtert werden kann, da die Siliziumdioxidverbindung in wässriger Lösung Kieselsäure freisetzen kann, die als Härte zur Bildung des Alkalisilikatgels fungieren kann.

Die wässrige Alkalisilikatlösung kann ein Lithiumsilikat oder eine Mischung aus Lithium-, Natrium- und/oder Kaliumsilikat aufweisen. Auf diese Weise kann das Molverhältnis von Siliziumdioxid zu Alkalimetalloxid (Modul) auf einen gewünschten Wert eingestellt werden.

Das Alkalisilikatgel der Zwischenschicht kann ein Modul von beispielsweise 4,5 bis 8, insbesondere 4,5 bis 7, insbesondere 4,8 bis 5,1 aufweisen.

Das Alkali-Metalloxid kann zur Einstellung des Molverhältnis von Siliziumdioxid (SiO₂) zu Alkali-Metalloxid (M₂O) ein Lithiumoxid oder eine Mischung aus Lithium-, Natrium- und/oder Kaliumoxid aufweisen.

Die Zwischenschicht kann einen Gehalt von 30% bis 55%, insbesondere von 37% bis 40% Siliziumdioxid aufweisen, wodurch das ausgehärtete Alkalisilikatgel als homogenes Alkalisilikat-Wasserglas gebildet werden kann.

Die Zwischenschicht kann in anderen Ausführungsbeispielen bis 60% Wasser aufweisen. Dadurch wird es möglich, dass aufgrund der hohen Wärmekapazität des Wassers viel Energie durch die Zwischenschicht absorbiert werden kann und so ein Aufheizen des Hitzeschutzelements verlangsamt werden kann. Des Weiteren kann das Hitzeschutzelement dadurch eine hohe Feuerwiderstandsdauer erreichen, für den Verdampfungsprozess des Wassers eine grosse Wärmemenge absorbiert werden kann.

Die Zwischenschicht kann Mittel zur Senkung des Gefrierpunktes (Mittel zur Gefrierpunktserniedrigung) aufweisen, wobei das Mittel zur Gefrierpunktserniedrigung einen monofunktionellen und/oder polyfunktionellen Alkohol wie beispielsweise Glycerin, Glykol, Zucker, Di- und Polyethylenglykol und/oder Monoethylenglykol aufweisen kann.

In weiteren Ausführungsbeispielen kann das Hitzeschutzelement einen Randverbund entlang der Kante zwischen dem ersten und zweiten Trägerelement aufweisen. Dabei bilden der Randverbund und die Trägerelemente einen Zwischenraum, welcher mit der Zwischenschicht gefüllt ist. Dadurch wird es möglich, dass die Zwischenschicht in den Zwischenraum eingefüllt und in diesem gehalten werden kann. Das ausgehärtete Alkalisilikatgel kann auf diese Weise bis an den Rand des Hitzeschutzelements angeordnet werden und mit Hilfe des Randverbundes gegen die Umgebungsluft abgedichtet werden. Eine solche Abdichtung ist vorteilhaft, da das Alkalisilikatgel der Zwischenschicht mit der Umgebungsluft ungewollte Reaktionen eingehen könnte und so den Alterungsprozess des Hitzeschutzelements beschleunigt werden könnte.

Der Randverbund kann zweiteilig ausgebildet sein und einen Abstandhalter (und/oder Kleber) sowie eine Dichtmasse aufweisen. Der Abstandhalter kann bspw. innenseitig und die Dichtmasse aussenseitig angeordnet sein. Als Abstandhalter kommen Kunststoffe wie bspw. Butylpolymere - insbesondere Polyisobutylene - in Frage, auch hybride Aufbauten aus einem metallischen Gerüst und einem Kunststoff kommen in Frage. Als Dichtmasse ist bspw. Polysulfid geeignet; andere Kunststoffe wie z.B. Silikone und Polyurethane mit dichtenden Eigenschaften sind ebenfalls bekannt.

In weiteren Ausführungsbeispielen kann das Hitzeschutzelement zwischen dem ersten und zweiten Trägerelement eine Primerschicht angeordnet sein, wobei die Primerschicht ein Material aufweist, dessen Adhäsion an die Zwischenschicht und/oder an mindestens eines der Trägerelemente sich unter Brandschutz-Testbedingungen im Vergleich zur Raumtemperatur-Bedingungen verringert.

Der Begriff "Primer" ist so zu verstehen, dass die Primerschicht eine Adhäsion zwischen dem Trägerelement und der Zwischenschicht vermittelt, welche auch über lange Zeiten bei Normaltemperaturen - von bspw. maximal 50°C - einer Ablösung des Trägerelements und der Zwischenschicht voneinander vorbeugt.

Die Primerschicht kann an demjenigen Trägerelement angeordnet sein vorhanden, welche auf der dem Feuer zugewandten Seite (sofern diese definiert ist) liegt. Es ist auch möglich, dass die Primerschicht jeweils beidseitig der Zwischenschicht angeordnet ist.

Der Ansatz, dass die Primerschicht so ausgebildet ist, dass die Adhäsion unter Bedingungen nachlässt, welche bei einem Brandschutztest herrschen, beruht auf der Erkenntnis, dass bei grosser Erhitzung, welche bei Testbedingungen und auch im Ernstfall herrschen, das dem Feuer zugewandte Trägerelement bersten kann und sich einzelne Stücke lösen können. Wenn das der Fall ist, soll gesichert sein, dass die Kohäsion innerhalb der Zwischenschicht grösser ist als die Adhäsion zum der Wärmequelle zugewandten Trägerelement, so dass keine Lücken in die Zwischenschicht gerissen werden, wenn sich Stücke aus dem Trägerelement lösen.

Die Primerschicht kann bspw. so ausgestaltet sein, dass sich ihre Adhäsion an die Zwischenschicht bei Temperaturen nahe dem Siedepunkt von Wasser, d.h. bei Temperaturen von über ca. 80°C oder über ca. 90°C signifikant verringert.

Bei den vorliegenden Zwischenschichten auf Alkalisilikatbasis kann beispielsweise ein Silan, insbesondere ein organofunktionelles Silan, insbesondere ein Alkylsilan, bspw. ein fluoriertes und/oder chloriertes Alkylsilan als Primer verwendet werden. Alternativ kann die Primerschicht ein Material aus der Gruppe der Wachse, Fettsäuren, Fettsäurederivate, thermoplastischen Lacke, jeweils bevorzugt mit einem Erweichungspunkt bzw. Schmelzpunkt zwischen 70°C oder 80°C und 150°C aufweisen.

Mindestens eines der Trägerelemente kann als insbesondere Glasscheiben, im Speziellen flache Glasscheiben ausgebildet sein. In anderen Ausführungsbeispielen kann mindestens eines der Trägerelemente als Keramikgläser oder spezielle gebogene Gläser ausgebildet sein. Besonders günstig können thermisch oder eventuell chemisch vorgespannte Glasscheiben sein. Als Alternativen zu Glasscheiben auf Siliziumoxidbasis kommen auch transparente Träger auf Polymerbasis (bspw. aus Polycarbonaten oder Poly-Methyl-Methacrylat (PMMA; Acrylglas), teilweise kristalline "Gläser" (Keramikgläser) oder Verbundsysteme mit Glasscheiben und Kunststoffträgern in Frage.

Mindestens eines der Trägerelemente kann als transparentes Trägerelement ausgebildet sein.

Das Hitzeschutzelement kann mehrere jeweils zwischen zwei Trägerelementen angeordnete Zwischenschichten aufweisen. Auf diese Weise wird es möglich, dass die mehreren Zwischenschichten mehr Energie absorbieren können als eine einzelne Zwischenschicht. Dadurch können die Hitzeschutzeigenschaften des Hitzeschutzelements verbessert werden.

In weiteren Ausführungsbeispielen kann das Hitzeschutzelement als Brandschutzelement ausgebildet sein. Ein Brandschutzelement ist durch eine Feuerwiderstandsdauer gekennzeichnet. Der Feuerwiderstand bzw. Brandwiderstand kann als Fähigkeit eines Bauteils betrachtet werden, eine wirksame Barriere gegen die Ausbreitung von Flammen, Rauch und heissen Gassen zu bilden und/oder die Transmission von Hitzestrahlung zu verhindern. Eine Feuerwiderstandsdauer ist als Mindestdauer in Minuten definiert, während der das Brandschutzelement bei der Prüfung nach genormten Prüfungsverfahren mit definierten Randbedingungen (EN 1364 und EN 1363) und unter einer bestimmten Temperaturbeanspruchung bestimmte eventuell genormte Anforderungen erfüllt. Beispielsweise sind solche genormten Anforderungen in EN 13505 aufgeführt bzw. definiert und ermöglichen die Klassifizierung von Brandschutzelementen. Die Feuerwiderstandsdauer ist somit ein Mass für die Brauchbarkeit der Konstruktion im Brandfall. Mit anderen Worten: Während der Feuerwiderstandsdauer wird der Durchgang von Feuer durch das Brandschutzelement verhindert, also ein Raumabschluss unter Brandbedingungen (EN 1363 und EN 1364) sicherstellt. Zusätzlich zum Raumabschluss kann das Brandschutzelement noch weitere Funktionen, wie beispielsweise eine Hitzeisolierung erfüllen.

Klassifizierungszeiten werden für jede Klassifikation in Minuten angegeben, wobei die Klassifizierungszeiten: 10, 15, 20, 30, 45, 60, 90, 120, 180, 240 oder 360 zu verwenden sind. Die Feuerwiderstandsdauer ist damit mit mindestens 10 Minuten definiert. Im Allgemeinen erfüllt ein Brandschutzelement somit mindestens 10 Minuten die entsprechenden Kriterien bzw. Anforderungen (siehe Klassifizierung - EN 13501) für die Feuerwiderstandsdauer. Das Minimalkriterium ist dabei der Raumabschluss. Ein Brandschutzelement muss daher mindestens als E10 klassifiziert werden können.

Das Alkalisilikatgel kann ein Molverhältnis von Siliziumdioxid zu Alkalimetalloxid (Modul) grösser 4 ausweisen. Es ist auch möglich, dass das Modul des Alkalisilikatgels im Bereich zwischen 4.2 und 6.5 liegt.

Ebenfalls Gegenstand der Erfindung ist ein Verfahren zur Herstellung eines Hitzeschutzelements der beschriebenen Art.

Beim Verfahren zur Herstellung des Hitzeschutzelements wird ein Gemisch aus der wässrigen Alkalisilikatlösung und der Siliziumdioxidverbindung in einen Zwischenraum zwischen dem ersten und zweiten Trägerelement eingebracht. Das Gemisch härtet unter Energieeintrag im Zwischenraum zu einem Alkalisilikatgel aus und bildet so die Zwischenschicht.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Im Folgenden wird der Erfindungsgegenstand anhand von bevorzugten Ausführungsbeispielen, welche in der beiliegende Zeichnung dargestellt ist, näher erläutert. Es zeigt jeweils schematisch:

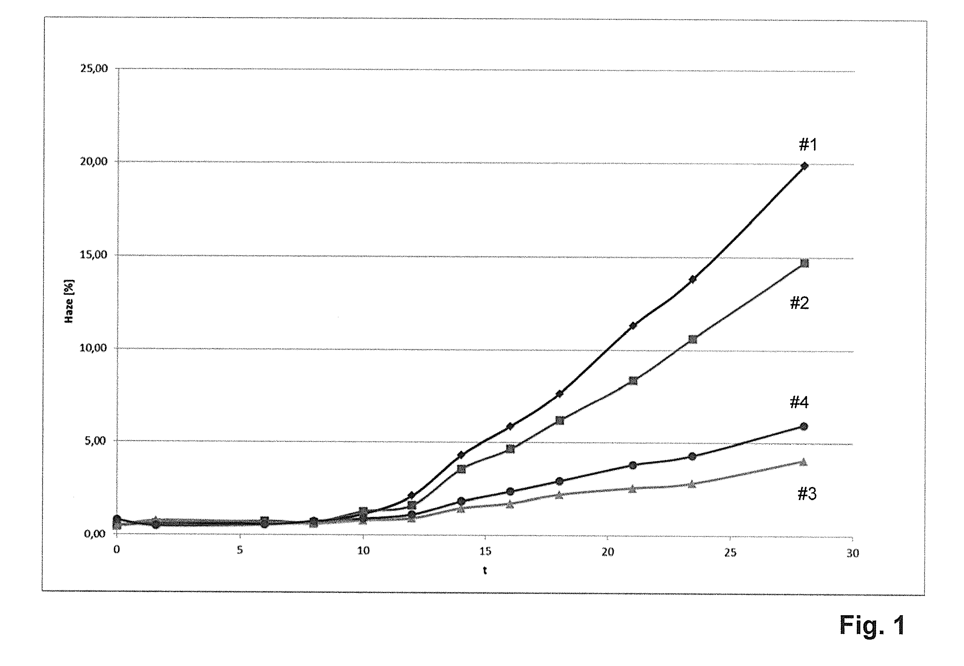

- Figur 1: Trübungsentwicklung in Hitzeschutzelementen über die Zeit für verschiedene Zusammensetzungen einer Zwischenschicht in einem Hitzeschutzelement bei 60°C,

Grundsätzlich sind in der Figur gleiche oder analoge Teile mit gleichen Bezugszeichen versehen.

Die Figur 1 zeigt die Trübungsentwicklung in Hitzeschutzelementen über die Zeit in Wochen für verschiedene Zusammensetzungen einer Zwischenschicht in einem Hitzeschutzelement bei einer Lagerung bei 60°C.

Bei Langzeitmessungen der Trübung von Hitzeschutzelement mit zwei Trägerelementen und einer Zwischenschicht aus ausgehärtetem Alkalisilikatgel mit einem konstanten Molverhältnis von Siliziumdioxid zu Alkalimetalloxid (auch als Modul bezeichnet) hat sich gezeigt, dass eine Zudosierung von Lithiumsilikat einen positiven Effekt auf die Langzeittransparenz der Zwischenschicht hat.

Um die Alterung von Hitzeschutzelementen mit verschiedenen Zudosierungen von Lithiumsilikat zum Alkalisilikatgel der Zwischenschicht zu untersuchen, wurden die Hitzeschutzelemente bei einer konstanten Temperatur von 60°C gealtert und deren Trübung über die Zeit gemessen, wie in Figur 1 gezeigt. Mit Hilfe einer solchen Langzeitmessung kann eine Trübung initiiert werden und sehr ungünstige Umwelteinflüsse simuliert werden.

Die Trübung des Hitzeschutzelements kann prozentual in Haze (H) angegeben werden. Durch den Haze-Wert wird der Streuanteil des durchfallenden Lichts ermittelt. Niedrige Haze-Werte korrespondieren mit einer hohen Transparenz und ein hoher Haze-Wert ist mit einer Trübung von transparenten Elementen verbunden.

Die folgenden Beispiele dienen der Veranschaulichung und Erläuterung der Erfindung und sind nicht als beschränkend auszulegen.

Die folgenden prozentualen Angaben zur Zusammensetzung des Alkalisilikatgels sind als Gewichtsprozent zu verstehen und beziehen sich auf das ausgehärtete Alkalisilikatgel.

### Beispiel 1 - Probe #1

Ein wasserhaltiges Alkalisilikat, als Gemisch aus 56% einer wässrigen Alkalisilikatlösung und 39.5% eines Fällungssiliziumdioxid wird mit 4.5% Monoethylenglykol (MEG) als Mittel zur Gefrierpunktserniedrigung versetzt. Das Modul des wasserhaltigen Alkalisilikats wird auf 5.09 eingestellt. Das wasserhaltige Alkalisilikat wird in einen Zwischenraum zwischen einem ersten und zweiten Trägerelement, welche je als vorgespannte Glasscheibe ausgebildet sind, eingebracht. Der Zwischenraum wird durch die beiden parallelen Glasscheiben und einen Randverbund entlang der Kanten der Glasscheiben gebildet. Das in den Zwischenraum eingebrachte wasserhaltige Alkalisilikat mit einem Modul von 5.09 wird im Zwischenraum zu einem Alkalisilikatgel ausgehärtet. Das auf diese Weise hergestellte Hitzeschutzelement ist beispielsweise aus WO 94/04355 bekannt.

Das Hitzeschutzelement wird einer Langzeitmessung der Trübung bei 60°C unterzogen. Die Resultate der Langzeitmessung sind in Figur 1 gezeigt. Die Messwerte der Probe #1, welche als Raute (◆) gekennzeichnet sind, zeigen einen Anstieg der Trübung. Nach 21 Wochen beträgt der Haze-Wert 11.3%.

### Beispiel 2 - Probe #2

In einer abgeänderten Variante wurde ein wasserhaltiges Alkalisilikat gemäss Beispiel 1 verwendet, bei dem jedoch 0.1% (Gewichtsprozent, bezogen auf das ausgehärtete Alkalisilikatgel) einer Lithiumsilikatlösung mit 2.65% Lithiumoxid zudosiert wurden. Das Modul des wasserhaltigen Alkalisilikats wurde, wie in Beispiel 1, auf 5.09 eingestellt, alle anderen Parameter bleiben im Vergleich zu Beispiel 1 unverändert. Das entsprechende Hitzschutzelement wurde ebenfalls einer Langzeitmessung der Trübung bei 60°C unterzogen. Die Resultate der Langzeitmessung sind in Figur 1 gezeigt. Die Messwerte der Probe #2, welche als Quadrate (■) gekennzeichnet sind, zeigen einen Anstieg der Trübung. Nach 21 Wochen beträgt der Haze-Wert im Vergleich zu Probe #1 nur 8.4%.

### Beispiel 3 - Probe #3

In einer variierenden Ausführungsform wurde ein wasserhaltiges Alkalisilikat gemäss der Beispiele 1 und 2 (Probe #1 und Probe #2) verwendet, bei dem jedoch 0.2% der Lithiumsilikatlösung mit 2.65% Lithiumoxid zudosiert wurden. Das Modul des wasserhaltigen Alkalisilikats wurde, wie in Beispiel 1 und 2 auf 5.09 eingestellt, alle anderen Parameter bleiben im Vergleich zu Beispiel 1 unverändert. Das entsprechende Hitzschutzelement wurde ebenfalls einer Langzeitmessung der Trübung bei 60°C unterzogen. Die Resultate der Langzeitmessung sind in Figur 1 gezeigt. Die Messwerte der Probe #3, welche als Dreiecke (A) gekennzeichnet sind, zeigen einen minimalen Anstieg der Trübung. Nach 21 Wochen beträgt der Haze-Wert nur 2.6%.

### Beispiel 4 - Probe #4

In einer variierenden Ausführungsform wurde ein wasserhaltiges Alkalisilikat gemäss Beispiele 3 (Probe #3) verwendet, bei dem jedoch 0.5% der Lithiumsilikatlösung mit 2.65% Lithiumoxid zudosiert wurden. Das Modul des wasserhaltigen Alkalisilikats wurde, wie in Beispiel 1, 2 und 3 auf 5.09 eingestellt, alle anderen Parameter bleiben im Vergleich zu Beispiel 1 unverändert. Das entsprechende Hitzschutzelement wurde ebenfalls einer Langzeitmessung der Trübung bei 60°C unterzogen. Die Resultate der Langzeitmessung sind in Figur 1 gezeigt. Die Messwerte der Probe #4, welche als Kreise (●) gekennzeichnet sind, zeigen einen minimalen Anstieg der Trübung. Nach 21 Wochen beträgt der Haze-Wert nur 3.8%.

Überblick: Das Modul sowie der Wassergehalt der Proben #2-#4 werden wie für Probe #1 auf 5.09 bzw. 42% eingestellt. Bei Probe #2 werden 0.1% (Gewichtsprozent) einer Lithiumsilikatlösung zudosiert. Im Weiteren werden für Probe #3 0.2% und für Probe #4 0.5% der Lithiumsilikatlösung zudosiert.

Die oben beschriebenen Zusammensetzungen für das Alkalisilikatgel als Zwischenschicht werden für entsprechende Hitzeschutzelemente (#1-#4) verwendet bei denen das Alkalisilikatgel zwischen einem ersten und zweiten Trägerelement aus Glas angeordnet ist. Die Proben #1-#4 werden je einer Langzeitmessung der Trübungstendenz unterzogen. Der zu den Probenummern (#1 bis #4) und Zusammensetzungen korrespondierende zeitliche Verlauf der Trübung bei 60°C ist in Figur 1 gezeigt. Die entsprechenden Messpunkte sind für die Probe #1 rautenförmig, Probe #2 als Quadrate, Probe #3 als Kreise und Probe #4 als Kreise dargestellt.

Die Prozentangaben für die Zusammensetzung des Alkalisilikatgels der Zwischenschicht beziehen sich auf die Gewichtsprozent in Bezug auf die Gesamtmasse der Zwischenschicht.

Es ist klar aus Figur 1 ersichtlich, dass eine Zudosierung von Lithiumsilikat in geringen Mengen (siehe beispielsweise Probe #2) eine Reduktion der Trübung bewirkt. Eine deutlich stärkere Reduktion der Trübung kann durch die weitere erfindungsgemässe Zudosierung von Lithiumsilikat bewirkt werden (siehe Probe #3 und #4 in Figur 1). Wie aus Figur 1 ersichtlich ist, beträgt der Haze-Wert nach 21 Wochen für Probe #1 11.3%, für Probe #2 mit einer geringen Zudosierung Lithiumsilikat bereits nur noch 8.4%, für Probe #3 nur 2.6 % und für Probe #4 mit einer höherer Dosierung 3.8%. Es wird daher deutlich, dass eine Überdosierung von Lithiumsilikat überraschenderweise zu einer erneuten Erhöhung des Harz-Wertes führen kann.

Die Langzeitmessungen der Trübung der Hitzeschutzelemente zeigen wie in Figur 1 gezeigt, dass im Bereich von 0.05 bis 0.14 Gewichtsprozent Lithiumsilikat (Proben #3 und #4) eine verstärkte Reduktion der Trübung des Hitzeschutzelements als Alterserscheinung erreicht werden kann. Bei einem höheren Gehalt an Lithiumsilikat kann erneut eine Zunahme der Eintrübung im Laufe der Zeit festgestellt werden. Mit anderen Worten: Eine Über- oder Unterdosierung von Lithiumsilikat zum Alkalisilikatgel führt zu keinem oder einem weniger ausgeprägten positiven Effekt auf die Alterungsbeständigkeit des Hitzeschutzelements.

Für das erfindungsmässe Hitzeschutzelement kann das Alkalisilikatgel der Zwischenschicht 54% bis 59% einer wässrigen Alkalisilikatlösung und 35% bis 42% einer Siliziumdioxidverbindung sowie 0.05% bis 0.14% Lithiumsilikat aufweisen.

## Patentansprüche

1. Lichtdurchlässiges Hitzeschutzelement mit einem ersten und einem zweiten Trägerelement aufweisend eine Zwischenschicht zwischen dem ersten und zweiten Trägerelement, wobei die Zwischenschicht ein ausgehärtetes Alkalisilikatgel aufweist, welches aus einer wässrigen Alkalisilikatlösung und einer Siliziumdioxidverbindung gebildet wird, wobei das Alkalisilikatgel ein Molverhältnis von Siliziumdioxid (SiO₂) zu Alkali-Metalloxid (M₂O) grösser 4 aufweist, **dadurch gekennzeichnet, dass**
das Alkalsilikatgel 0.05 bis 0.14 Gewichtsprozent Lithiumsilikat aufweist.

2. Hitzeschutzelement gemäss Anspruch 1, wobei die Siliziumdioxidverbindung ein Kieselsol, Fällungssiliziumdioxid, Kieselgel und/oder pyrogenes Siliziumdioxid aufweist.

3. Hitzeschutzelement gemäss einem der Ansprüche 1-2, wobei die Alkalisilikatlösung ein Lithiumsilikat oder eine Mischung aus Lithium-, Natrium- und/oder Kaliumsilikat davon aufweist.

4. Hitzeschutzelement gemäss einem der Ansprüche 1-3, wobei das Alkali-Metalloxid ein Lithiumoxid oder eine Mischung aus Lithium-, Natrium- und/oder Kaliumoxid aufweist.

5. Hitzeschutzelement gemäss einem der Ansprüche 1-4, wobei die Zwischenschicht ein Mittel zur Senkung des Gefrierpunktes des Wasseranteiles aufweist.

6. Hitzeschutzelement gemäss einem der Ansprüche 1-5, wobei das Hitzeschutzelement zwischen dem ersten und zweiten Trägerelement einen Randverbund entlang der Kanten aufweist, wobei der Randverbund und die Trägerelemente einen Zwischenraum bilden, welcher mit der Zwischenschicht gefüllt ist.

7. Hitzeschutzelement gemäss Anspruch 6, wobei der Randverbund einen Abstandhalter und eine Dichtmasse aufweist.

8. Hitzeschutzelement gemäss einem der Ansprüche 1-7, wobei zwischen dem ersten und zweiten Trägerelement eine Primerschicht aus einem Material angeordnet ist, dessen Adhäsion an die Zwischenschicht und/oder an mindestens eines der Trägerelemente sich unter Brandschutz-Testbedingungen im Vergleich zur Raumtemperatur-Bedingungen verringert.

9. Hitzeschutzelement gemäss einem der Ansprüche 1-8, wobei mindestens eines der Trägerelemente als vorgespannte Glasscheibe ausbildet ist.

10. Hitzeschutzelement gemäss einem der Ansprüche 1-9, wobei das Hitzeschutzelement mehrere jeweils zwischen zwei Trägerelementen angeordnete Zwischenschichten aufweist.

11. Hitzeschutzelement gemäss einem der Ansprüche 1-10, wobei das Hitzeschutzelement ein Brandschutzelement ist.

12. Verfahren zur Herstellung eines lichtdurchlässigen Hitzeschutzelementes gemäss einem der Ansprüche 1-11, wobei unter Verwendung eines wasserhaltigen Alkalisilikates, als ein Gemisch aus der wässrigen Alkalisilikatlösung und der Siliziumdioxidverbindung in einen Zwischenraum zwischen dem ersten und zweiten Trägerelement eingebracht wird und im Zwischenraum als Zwischenschicht zum Alkalisilikatgel aushärtet, wobei das Molverhältnis von Siliziumdioxid zu Alkali-Metalloxid auf grösser 4 eingestellt wird und das Alkalsilikatgel 0.05 bis 0.14 Gewichtsprozent Lithiumsilikat aufweist.
